# EUROPÄISCHE PATENTSCHRIFT

(11) **EP 0 379 628 B1**
(45) Veröffentlichungstag und Bekanntmachung des Hinweises auf die Patenterteilung: **17.08.1994**
(21) Anmeldenummer: 89103706.1
(22) Anmeldetag: 03.03.1989
(51) Int. Cl.: B65G 53/66, B65G 53/52

(54) **Verfahren zum pneumatischen Fördern von Fördergut sowie Vorrichtung zum Steuern der Lufteinspeisung dafür**
Method for the pneumatic transport of materials and device for the air-feed control thereof
Procédé de transport pneumatique de matières et dispositif de réglage de l'alimentation d'air

(30) Priorität: 27.01.1989 DE 3902388
(43) Veröffentlichungstag der Anmeldung: 01.08.1990
(73) Patentinhaber: Alb. Klein GmbH & Co. KG, D-57568 Niederfischbach (DE)
(72) Erfinder: Federhen, Bernd, D-5900 Sigen 21 (DE); May, Manfred, D-5241 Niederfischbach (DE)
(74) Vertreter: Hiebsch, Gerhard F., Dipl.-Ing.

(56) Entgegenhaltungen:
- EP-A- 0 060 135
- DE-A- 1 900 355

## Beschreibung

Die Erfindung betrifft eine Vorrichtung nach dem Oberbegriff des Patentanspruches 1 und ein damit durchführbares Verfahren zum pneumatischen Fördern von Fördergut in einer rohrartigen Förderleitung, in die -- bevorzugt quer zur Förderrichtung -- aus einer Verbindungsleitung Druckgas eingeführt wird.

Die zu den Dichtstromförderverfahren zählende Propfenförderung wird eingesetzt, um Schüttgut möglichst schonend mit geringer Geschwindigkeit und kleinem Förderdruck durch ein Rohr zu transportieren. Besondere Bedeutung hat dieses Förderverfahren für abrasive oder abriebempfindliche Produkte. Da größere Durchsätze mit kleineren Luftmengen erreicht werden können, bleiben die Energiekosten niedrig.

Wird am Beginn einer Förderleitung dem Schüttgut nur wenig Förderluft zugegeben, bildet es von sich aus Propfen, die durch Luftpolster voneinander getrennt sind.

Besonders an Bögen der Förderleitung können sich aber während des Förderns Propfen Zusammenschieben, die schließlich eine derartige Länge erreichen, daß der Förderdruck zur Aufrechterhaltung des Guttransportes nicht mehr ausreicht. Hinzu kommt, daß der Druck zum Schieben eines Propfens nicht nur von dessen Länge, sondern auch von der Propfenporosität abhängig ist; insbesondere bei Schüttgütern mit breitem Kornspektrum entstehen Propfen unterschiedlicher Porosität.

Es ist bekannt, daß sich durch Lufteinspeisung in den Propfen der zu dessen Förderung notwendige Luftdruck erheblich senken läßt. Hierzu sind verschiedene Vorrichtungen vorgeschlagen worden.

So beschreibt die DE-PS 33 23 739 eine Verbindungsleitung, welche durch eine federbelastete Membrane verschlossen werden kann; diese Membrane befindet sich zwischen zwei Lufträumen sowie unter Einfluß einer Schraubenfeder. Nach der Lehre der DE-PS 33 23 739 ist eine vielzahl pneumatisch verbundener absperrventile mit Kammern und Membranen erforderlich; man gibt nur an den Stellen zusätzlich Förderluft in die Förderleitung, an denen sich gerade ein Propfen befindet und lockert diesen auf. Die Luft wird dann und dort in Propfen und Membranen eingeblasen, wenn der Differenzdruck zwischen zwei benachbarten Absperrventilen einen vorsbestimmten Wert übersteigt.

Nachteilig ist bei einer derartigen Vorrichtung, daß stets mehrere Absperrventile benötigt werden auch dann, wenn nur an einer bestimmten Stelle der Förderleitung -- beispielsweise an einem Bogen -- die auflockernde Wirkung des eingespeisten Luftstrahles erforderlich wäre. Zudem muß die Membrane den Differenzdruck zwischen zwei Einspeisstellen ertragen können, hierdurch reagiert die Vorrichtung träge.

Als weiterer Nachteil ist anzusehen, daß das System Membrane/Feder/Luftdruck ungedämpft ist, wodurch die Membrane bei entsprechenden Druckverhältnissen nicht voll öffnet, sondern zu flattern beginnt. Die bei geöffnetem Ventilsitz von der Nebenleitung durch das Absperrventil zur Förderleitung strömende Luft wirkt zusätzlich auf die Membrane, so daß deren Beaufschlagung sich nicht nur aus dem Druck der Förderleitung zu ergeben vermag.

Bei einer anderen Konzeption, wie sie beispielsweise durch die DE-PS 30 24 568 angeboten ist, wird in gewissen Abständen -- ständig oder zeitlich getaktet -- Luft in die Förderleitung, in denen sich gerade kein Fördergut Befindet. Es ist nachteilig, daß dadurch die Förderluftmenge im Förderer -- und damit die Fördergeschwindigkeit --ständig zunimmt und die Förderluft nicht optimal ausgenützt wird. Durch ein stufenweises Erweitern der Förderleitung wird verhältnismäßig erfolglos versucht, den Geschwindigkeitsanstieg auszugleichen. Angesichts dieses Standes der Technik hat sich der Erfinder das Ziel gesetzt, ein Verfahren und eine Vorrichtung der eingangs erwähnten Alt zu schaffen, mit denen die erkannten Nachteile der bekannten Verfahren und Vorrichtungen vermieden werden.

Zur Lösung dieser Aufgabe führt, eine Vorrichtung nach der Lehre des Patentanspruches 1; mit dieser Vorrichtung läßt sich ein Verfahren durchführen, welches sich dadurch auszeichnet, daß bei Druckanstieg in der Förderleitung in Förderrichtung vor der an eine Nebenleitung mit hohem Druck angeschlossenen Verbindungsleitung diese durch einen aus der Förderleitung unmittelbar der Verbindungsleitung zugeführten Luftstrom für die Druckgase zu öffnen sowie bei Druckgleichheit in der Förderleitung im Bereich vor und nach der Mündung der Verbindungsleitung diese Luftzufuhr wieder zu unterbrechen ist.

Die Verbindungsleitung verläuft zwischen der Förderleitung und einer -- höheren Druck als die Förderleitung fuhrenden -- Nebenleitung und wird von einem durch einen Energiespeicher in deffinierter Grundstellung gehaltenen Steuerorgan geschlossen gehalten, bis in der Förderleitung der Druck zunimmt. Dann bewegt sich erfindungsgemäß das Steuerorgan bei einem höheren Druck in einer ersten Fühlerleitung gegen die Kraft des Energiespeichers so, daß Druckluft von der Nebenleitung in die Förderleitung strömt; bei Druckgleichheit in der ersten und einer zweiten Fühlerleitung geht das Steuerorgan wieder in seine Grundstellung zurück. So sit erfindungsgemäß als Steuerorgan ein Schieber in der Verbindungsleitung vorgesehen, der diese in einer Grundstellung sperrt sowie in eine Strömungsraum zwischen der ersten und der zweiten -- andernends jeweils an unterschiedlichen Seiten der Verbindungsleitung in die Förderleitung mündenden -- Fühlerleitung angeordnet ist.

Nach einem weiteren Merkmal der Erfindung ist jeder der Fühlerleitungen über eine Drosselstrecke an den zur Nebenleitung führenden Abschnitt der Verbindungsleitung angeschlossen, wobei diese Drosselstrecken engen Querschnittes bevorzugt parallel zu einer jenen Strömungsraum bildenden Längsbohrung eines Gehäuseblocks verlaufen.

Vorteilhafterweise besteht der Schieber aus zwei durch einen Abschnitt engeren Querschnittes, insbesondere durch einen Schieberstab, in Abstand verbundenen Kolbenkörpern, die mit -- vom Versetzungsmaß der Leitungsabschnitte der Verbindungsleitung bestimmten -- axialem Spiel in der Längsbohrung lagern und von denen sich zumindest einer der Kolbenkörper gegen den axial wirkenden Energiespeicher stützt, wobei der Abschnitt engen Querschnittes, also der Schieberstab, in einer gegen die den Energiespeicher geführten Öffnungsstellung des Schiebers die Verbindungsleitung freigibt.

Im Rahmen der Erfindung liegt es, daß die Mündungen der durch die Schieber trennbaren Abschnitte der Verbindungsleitung bzw. von an diese Abschnitte angeschlossene Querbohrungen des Gehäuseblockes in der Längsbohrung um ein axiales Maß zueinander seitlich -- also bezüglich der Querbohrungen radial -- versetzt sind, welches geringer ist als die axiale Länge jenes Schieberstabes und gewährleistet, daß eine deutliche Trennung zwischen der Grundstellung des Schiebers und dessen Offenstellung besteht.

Die Ausbildung des Steuerorgans in Form eines Gehäuseblockes mit Längsbohrung für den Schieber Drosselbohrungen für die Fühlerleitungen ist von einfachem Aufbau und dennoch von großer Wirksamkeit. Es bedarf des Einsatzes eines einzigen Gerätes dieser Art, um die Steuerung des gesamten Fördervorganges zu gewährleisten. Die in unterschiedlichen Abständen jeweils an einer Seite der Verbindungsleitung in die Förderleitung mündenden Fühlerleitungen stellen -- im Gegensatz zu dem bekannten Stand der Technik -- Teile einer Zweigleitung der Förderleitung dar. Diese Zweigleitung kreuzt die Verbindungsleitung außerhalb der Längsbohrung, ist aber mit deren Enden ebenfalls luftführend verbunden.

Von besonderer Bedeutung für das Öffnen und Schließen der Leitungen ist ein Ventil, das den Mündungsstellen der Verbindungsleitung und/oder der Fühlerleitung/en in Strömungsrichtung vorgeordnet ist; dieses weist eine elastische Lippe auf, die einem Förderspalt zugeordnet ist und diesen druckabhängig öffnet oder schließt. Für dieses Ventil, das in den Ansprüchen 8 bis 13 beschrieben ist, wird auch unabhängig von dem oben beschriebenen Verfahren und seiner Vorrichtung Schutz beansprucht.

Es handelt sich um ein Ventil zur Steuerung der Strömung eines Fluids von einem ersten Raum hohen Druckes zu einem zweiten Raum niedrigen Druckes zur Verteilung des Fluids im letztgenannten Raum bzw. zur sicheren, dauerhaften Sperrung einer unerwünschten Strömung von der Förderleitung zur Begleitleitung, wenn in letzterer der Druck unter den der Förderleitung abgesunken sein sollte, auch dann, wenn das Fluid Fremdkörper enthält.

In marktüblichen Rückschlagventilen mit federbelasteten Kolben setzen sich Fremdkörper an den starren Dichtflächen fest und erzeugen Undichtigkeiten und Schwergängigkeit. Sie benötigen darum einen hohen Öffnungsdruck und schließen in der anderen Strömungsrichtung nicht sicher. Ihre Herstellung ist teuer. Das durchströmende Fluid wird nicht auf eine größere Fläche verteilt. Bezüglich dieser Mängel wird durch ein Ventil Abhilfe geschaffen, bei dem eine elastische Lippe an einem querschnittlich etwa V-förmigen Ring den Strömungsweg des Fluides öffnet oder schließt.

Bei einer besonderen Ausführung dieses Ventils sitzt der V-förmige Ring auf einem Körper mit Strömungskanälen und legt sich gegen die elastische Lippe eines zweiten solchen Ringes oder gegen eine feste Fläche.

Ist der Druck im ersten Raum größer als der Druck im zweiten Raum, hebt das strömende Fluid die Dichtlippen, das Fluid wird am Lippenumfang verteilt. Die Lippen flattern infolge der Strömung und lösen so anhaftende Fremdkörper.

Ist der Druck im zweiten Raum größer als der Druck im ersten Raum, so unterstützt er die Dichtkraft der Dichtlippen.

Als sehr geeignet für den Einsatz als Dichtelement haben sich sogenannte V-Ringe erwiesen. Diese werden als Dichtungen bei der Radialbewegung von Wellen an drucklosen Stellen verwendet.

Der Ring des erfindungsgemäßen Ventils mit seiner zu einer Radialebene geneigten Lippe wird aus verschleißfesten Elastomeren geformt. Das so gestaltete Ventil kann nun im Rahmen der Erfindung beispielsweise als Luftverteileinrichtung in Fluidisierungseinrichtungen im Bereich von Staublagerbehältern oder pneumatischen Druckgefäßförderern und als Rückschlagventil in pneumatischen Steuerungen eingesetzt werden.

Dank dieses Ventils wird bei der Vorrichtung nach Anspruch 2 eine Strömung von der Förderleitung zur Begleitleitung zuverlässig verhindert. Denn es hat sich gezeigt, daß dann, wenn im Verlaufe einer Förderleitung mehrere Vorrichtungen zum Steuern der Lufteinspeisung mit gemeinsamer Nebenleitung angeordnet sind, deren Funktion beeinträchtigt werden kann; in der Förderleitung fällt der Druck vom Förderleitungsanfang zu deren Ende hin ab. Öffnet eine Vorrichtung am Förderleitungsende gleichzeitig mit einer im Anfangsbereich der Förderleitung so kann sich der am Förderleitungsende herrschende Druck abbauen - im Anfangsbereich der Förderleitung kann Luft aus der Förderleitung durch die Vorrichtung in die Begleitleitung strömen. Dabei setzen sich vorgesehene Filter mit Feinstaub zu.

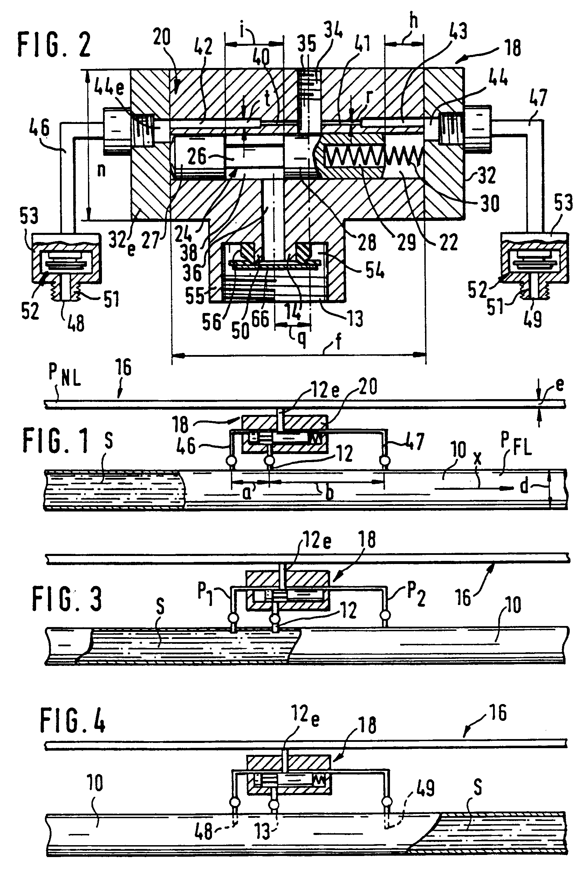

Weitere Vorteile, Merkmale und Einzelheiten der Erfindung ergeben sich aus der nachfolgenden Beschreibung eines bevorzugten Ausführungsbeispieles sowie anhand der Zeichnung; diese zeigt in
- Fig. 1:: den schematisierten Längsschnitt durch eine erfindungsgemäße Vorrichtung mit einem Steuerorgan in dessen Grundstellung;
- Fig. 2:: den gegenüber Fig. 1 vergrößerten Längsschnitt durch das Steuerorgan;
- Fig. 3:: die Vorrichtung nach Fig. 1 in zwei zu
- Fig. 4:: letzteren unterschiedlichen Betriebsstellungen;
- Fig. 5:: ein vergrößertes Detail der Fig. 2 mit
- Fig. 6:: Dichtlippe in zwei zueinander unterschiedlichen Betriebsstellungen;
- Fig. 7:: ein anderes Detail mit elastischen Organen in
- Fig. 8:: zwei Betriebsstellungen.
- Fig. 9:: einen Querschnitt durch einen Druckring der Fig. 5, 6;
Von einer Förderleitung 10 eines Durchmessers d für in Richtung x bewegtes Schüttgut S geht eine Verbindungsleitung 12 ab, deren Mündung in Fig. 2 mit 13 bezeichnet wird, die anderseits unter Zwischenschaltung eines Steuerorgans 18 mit einem Abschnitt 12ₑ an eine Nebenleitung 16 angeschlossen ist. Der Durchmesser e der Nebenleitung 16 entspricht hier etwa dem fünften Teil des Durchmessers d der Förderleitung 10.

Das Steuerorgan 18 weist einen Gehäuseblock 20 der Länge f und einer dieser gegenüber kürzeren Breite n auf mit einer in Längsrichtung verlaufenden Längsbohrung 22 für einen Schieber 24; letzterer besteht aus zwei durch einen axialen Schieberstab 26 verbundenen bolzenartigen Kolbenkörpern 27, 28, deren einer Kolbenkörper 28 der Länge i axial aufgebohrt ist und in einer Sackbohrung 29 das eine Ende einer Schraubenfeder als Energiespeicher 30 aufnimmt. Deren/dessen Federkraft kann mittels einer nicht dargestellten Stellschraube verändert werden.

Die Schraubenfeder 30 ragt aus dem Kolbenkörper 28 hinaus und stützt sich mit ihrem freien Ende gegen eine jene Längsbohrung 22 verschließende Stirnplatte 32 ab, die qm Gehäuseblock 20 festliegt. Eine entsprechende Stirnplatte 32ₑ überdeckt das andere Ende der Längsbohrung 22.

In der in Fig. 1, 2 dargestellten Grundstellung des Schiebers 24 steht der die Schraubenfeder (30) aufnehmende Kolbenkörper 28 in einem Abstand h zur benachbarten Stirnplatte 32, und deckt eine von der Längsbohrung 22 -- in Fig. 2 nach oben -- abgehende Querbohrung 34 ab, an deren Gewinde 35 der Abschnitt 12ₑ der Verbindungsleitung 12 zur Nebenleitung 16 anschließt; um ein Maß q versetzt, verläuft achsparallel zur Querbohrung 34 eine zweite Querbohrung 36 zwischen Längsbohrung 22 und dem zur Förderleitung 10 gerichteten Abschnitt der Verbindungsleitung 12.

Als Schieber 24 eignen sich in besonderem Maße geläppte Metallschieber ohne Weichdichtungen, die sich Schon bei Drücken von 2 KP. (Kilopascal) bewegen, so daß der gewünschte Differenzdruck zum Schalten von der Kraft des Energiespeichers 30 bestimmt wird. Selbstverständlich können auch Schieber 24 mit Weichdichtungen oder Rollmembranen eingesetzt werden.

Die Querbohrung 36 mündet in der Grundstellung des Schiebers 24 in einen von der Längsbohrung 22 und dem axialen Schieberstab 26 bestimmten Raum. In dieser Grundstellung und die Querbohrung 36 sowie die andere Querbohrung 34 somit durch den Kolbenkörper 28 voneinander getrennt.

Parallel zur Längsbohrung 22 gehen beidseits von der oberen Querbohrung 34 enge Kanäle eines Durchmessers r von bevorzugt 1 mm als Drosselstrecke 40, 41 ab, die jeweils in eine koaxiale Bohrung 42, 43 größeren Durchmessers t übergehen. Diese Bohrungen 42, 43 münden jeweils über eine Anschlußkammer 44, 44ₑ in eine erste bzw. eine zweite Fühlerleitung 46 bzw. 47, die in unterschiedlichen Abständen a bzw. b zur Mündung 13 der Verbindungsleitung 12 bei Mündungsstellen 48 bzw. 49 an die Förderleitung 10 gelangen (Fig. 1, 4).

Der in der Nebenleitung 16 herrschende Luftdruck P_{NL} ist üblicherweise höher als der Druck P_{FL} in der Förderleitung 10, die -- wie beschrieben -- in Grundstellung des schiebers 24 dank des Kolbenkörpers 28 von der Nebenleitung 16 getrennt ist. Steigt beispielsweise durch einen in der Förderleitung 10 nahenden Propfen S der Druck P₁ in der ersten Fühlerleitung 46 an -- die zum einen über ihre Drosselstrecke 40 an den oberen Abschnitt 12ₑ der Verbindungsleitung sowie zum anderen über jene Anschlußkammer 44ₑ an die Längsbohrung 22 angeschlossen ist --, bewegt sich der Schieber 24 gegen die Kraft der Schraubenfeder 30 in Förderrichtung x, bis der Ringraum 38 beide Querbohrungen 34, 36 -- und damit beide Abschnitte 12ₑ, 12 der Verbindungsleitung -- erfaßt: von der Nebenleitung 16 strömt Druckluft P_{NL} in die Förderleitung 10 (Fig. 3).

Hat der mit Druckluft beaufschlagte Propfen S die Mündung 13 der Verbindungsleitung 12 und die Mündung 49 der zweiten Fühlerleitung 47 passiert, gleicht sich der Druck in beiden Fühlerleitungen 46, 47 wieder aus, und der Schieber 24 gleitet in seine Grundstellung zurück.

Durch die Fühlerleitungen 46, 47 strömt eine sehr geringe Menge an Luft, die der Nebenleitung 16 entnommen und bezüglich ihrer Quantität durch die Drosselstrecken 40, 41 bestimmt ist.

Zwischen die Querbohrung 36 bzw. die Fühlerleitungen 46, 47 einerseits sowie anderseits die Mündungsstellen 13 bzw. 48, 49, an denen die Auflockerungsluft bzw. die durch die Drosselstrecken 40, 41 geführte Luft eingespeist werden, sind gemäß Fig. 2 Ventile 50, 52 eingefügt, u.a. um beim Abstellen der Vorrichtung das Eindringen von Schmutzteilen in die Längsbohrung 22 bzw. an den Schieber 24 hintanzuhalten.

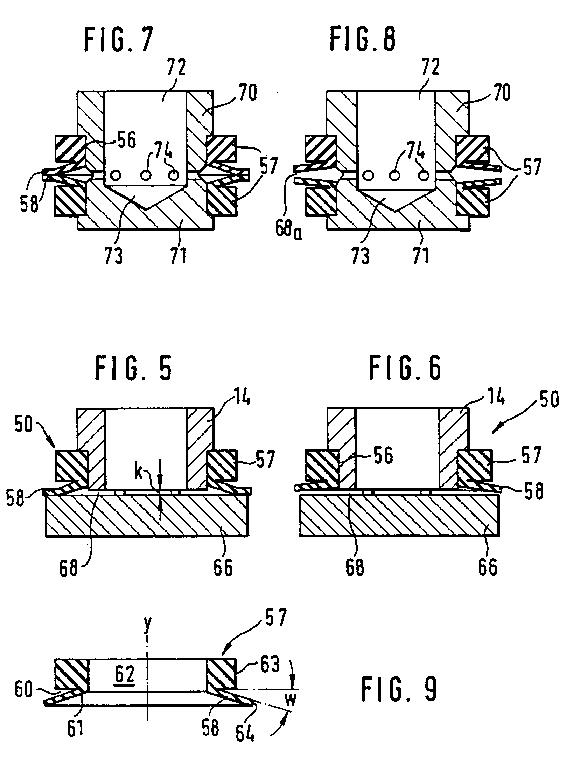

Das Ventil 50 der Verbindungsleitung 12 ist im Innenraum 54 eines Rohrstutzens 55 untergebracht und weist gemäß Fig. 5, 6 in einem schulterartigen Absatz 56 einen das Leitungsende 14 der Verbindungsleitung 12 umfangenden Druckring 57 mit nach außen geneigt abkragender Ringlippe 58 auf. Dies ist durch einen Keilspalt 60 so von dem elastischen Druckring 57 getrennt, daß ihre Anlenkstelle 61 nahe der Ringinnenfläche 62 liegt. Die Lippenaußenkante 64 liegt außerhalb der Ringaußenfläche 63. Im übrigen liegt die Ringlippe 58 in Schließstellung nach Fig. 1, 2, 5 einer dem Leitungsende 14 in Abstand K zugeordneten Querplatte 66 an und gibt in Öffnungsstellung nach Fig. 6 einen Ringspalt 68 frei.

Der Druckring 57 ist mit seiner in einem Winkel w in Strömungsrichtung y geneigten Ringlippe 58 einstückig aus verschleißfesten Elastomeren geformt. Ein anderes Ventil 52 ist an den Enden der Fühlerleitungen 46, 47 mit seinem -- Rohrstutzen 51 enthaltenden -- Gehäuse 53 in Fig. 1 nur angedeutet.

Das Ende 70 der Fühlerleitung 46, 47 ist durch einen Boden 71 geschlossen, oberhalb dessen in der Fühlerleitung 46, 47 radiale Durchbrüche 74 vorgesehen sind. Der Innenraum 72 des Endes 70 der Fühlerleitungen 46, 47 bildet am Boden 71 einen nach unten gerichteten Konus 73.

Hier befinden sich beidseits des Ringes aus Durchbrüchen 74 schulterartige Absätze 56 für zwei Druckringe 57, deren Ringlippen 58 in Schließstellung aufeinander liegen und in Öffnungsstellung zwischen sich einen Ringspalt 68 als Strömungsspalt freigeben.

Das beschriebene Ventil 50 verbindet zuverlässig jede Strömung von der Förderleitung 10 zur Nebenleitung 16 bei relativem Druckabfall in dieser; wenn in der Förderleitung 10 mehrere Vorrichtungen zum Steuern der Lufteinspeisung mit gemeinsamer Nebenleitung 16 angeordnet sind, kann deren Funktion beeinträchtigt werden, da in der Förderleitung 10 der Druck vom Förderleitungsanfang zu deren Ende hin abfällt. Öffnet eine Vorrichtung am Ende der Förderleitung 10 gleichzeitig mit einer in deren Anfangsbereich, so baut sich der am Förderleitungsende herrschende Druck ab. Ohne das Ventil 50 würde nun im Anfangsbereich Luft aus der Förderleitung 10 durch die Vorrichtung in die Nebenleitung 16 strömen.

## Patentansprüche

1. Vorrichtung zum Steuern der Lufteinspeisung aus einer Nebenleitung durch eine Verbindungsleitung in eine Förderleitung einer pneumatischen Förderanlage, wobei die Verbindungsleitung durch ein Steuerorgan mit einem Energiespeicher, insbesondere mit einer Feder, verschließbar ist, gekennzeichnet durch einen Schieber (24) als Steuerorgan in der Verbindungsleitung (12, 12ₑ), der diese in einer Grundstellung sperrt und der in einem Strömungsraum (22) zwischen einer ersten und einer zweiten Fühlerleitung (46, 47) angeordnet ist, deren jede andernends an einer anderen Seite der Verbindungsleitung in die Förderleitung (10) mündet.

2. Vorrichtung nach Anspruch 1, dadurch gekennzeichnet, daß jede der Fühlerleitungen (46, 47) über eine Drosselstrecke (40, 41) an den zur Nebenleitung (16) führenden Abschnitt (12ₑ) der Verbindungsleitung (12) angeschlossen ist, und oder daß jede Fühlerleitung (46, 47) außerhalb ihrer Drosselstrecke (40, 41) unmittelbar (44) mit dem Strömungsraum (22) verbunden ist.

3. Vorrichtung nach Anspruch 1 oder 2, gekennzeichnet durch einen Schieber (24) mit zumindest zwei durch einen Abschnitt (26) engeren Querschnittes in Abstand (i) verbundenen Kolbenkörpern (27, 28), die mit axialem Spiel in einer den Strömungsraum bildenden Längsbohrung (22) lagern, und von denen sich zumindest einer gegen den axial wirkenden Energiespeicher (30) stützt, wobei der Abschnitt engeren Querschnittes in Öffnungsstellung des Schiebers die Verbindungsleitung (12, 12ₑ) freigibt sowie gegebenenfalls sich in Öffnungsstellung der Abschnitt (26) engeren Querschnittes in einer gegen den Energiespeicher geführten Stellung befindet.

4. Vorrichtung nach einem der Ansprüche 1 bis 3, dadurch gekennzeichnet, daß die Mündungen (34, 35) der durch den Schieber (24) trennbaren Abschnitte (12ₑ, 12) der Verbindungsleitung in der Längsbohrung (22) um ein axiales Maß (q) zueinander versetzt sind, welches geringer ist als die axiale Länge (i) des Schieberabschnittes (26) engeren Querschnittes, und/oder daß die Kolbenkörper (27, 28) durch einen axialen Schieberstab (26) verbunden sind, der mit der Wandung der Längsbohrung (22) einen Ringraum (38) bildet.

5. Vorrichtung nach wenigstens einem der Ansprüche 1 bis 4, dadurch gekennzeichnet, daß der von der Förderleitung (10) kommende Abschnitt (12) der Verbindungsleitung in Grundstellung des Schiebers (24) in den dann dichten Ringraum (38) od.dgl. mündet und der andere Abschnitt (12ₑ) der Verbindungsleitung von dem an den Energiespeicher (30) angefügten Kolbenkörper (28) verschlossen ist, und/oder daß die Längsbohrung (22) in einem Gehäuseblock (20) verläuft und unter Freigabe endwärtiger Verbindungen mit den Fühlerleitungen (46, 47) durch Stirnplatten (32, 32ₑ) verschlossen ist.

6. Vorrichtung nach wenigstens einem der Ansprüche 1 bis 5, dadurch gekennzeichnet, daß eine Stirnplatte (32) als Widerlager für den Energiespeicher (30) dient und dieser in ein Sackloch (29) des benachbarten Kolbenkörpers (28) einragt, und/oder daß die Fühlerleitungen (46, 47) in die Förderleitung (10) in unterschiedlichen axialen Abständen (a und b) zur Verbindungsleitung (12) münden.

7. Vorrichtung nach wenigstens einem der Ansprüche 1 bis 6, dadurch gekennzeichnet, daß den Mündungsstellen (13 bzw. 48, 49) der Verbindungsleitung (12) und/oder der Fühlerleitungen (46, 47) Ventile (50, 52) vorgeschaltet sind, wobei gegebenfalls der Durchmesser (r) der parallel zur Längsbohrung (22) verlaufenden Drosselstrecken (40) etwa 1 mm beträgt.

8. Vorrichtung zum Verschließen und Öffnen von Rohrleitungen, insbesondere von Fühler- oder Verbindungsleitungen nach wenigstens einem der Ansprüche 1 bis 7, dadurch gekennzeichnet, daß einem Förderspalt (68, 68ₐ) wenigstens eine Lippe (58) zugeordnet und der Förderspalt mittels dieser schließbar ist.

9. Vorrichtung nach Anspruch 8, dadurch gekennzeichnet, daß die umlaufende Lippe (58) einstückig mit einem elastischen Ring (57) verbunden ist und in Ruhelage zu einer Radialebene des Ringes in einem Winkel (w) nach außen geneigt ist.

10. Vorrichtung nach Anspruch 8 oder 9, dadurch gekennzeichnet, daß die Lippe (58) nahe der Ringinnenfläche (62) an den Ring (57) angeformt ist und von dieser ab durch einen Keilspalt (60) vom Ring getrennt ist, und/oder daß die Endkante (64) der Lippe (58) außerhalb der Ringaußenfläche (63) liegt.

11. Vorrichtung nach einem der Ansprüche 8 bis 10, dadurch gekennzeichent, daß die Lippe (58) in Schließstellung einer Platte (66) anliegt, welche in Abstand (k) dem vom Ring (57) umfangenen offenen Leitungsende (14) gegenüberliegt und den Förderspalt (68) begrenzt.

12. Vorrichtung nach wenigstens einem der Ansprüche 8 bis 11, dadurch gekennzeichnet, daß ein geschlossenes Leitungsendes (70) in wenigstens einer Radialebene mit Durchbrüchen (74) versehen ist und beidseits der Radialebene sich in dieser treffende Lippen(58) vorgesehen sind, wobei gegebenenfalls die Lippen (58) in Öffnungsstellung einen Förderspalt (68ₐ) begrenzen.

13. Vorrichtung nach wenigstens einem der Ansprüche 8 bis 12, dadurch gekennzeichnet, daß der Ring (57) in einem Schulterabsatz (56) der Leitung (14, 70) lagert.

14. Verfahren zum pneumatischen Fördern von Fördergut in einer rohrartigen Förderleitung, in die -- bevorzugt quer zur Förderrichtung -- aus einer Verbindungsleitung Druckgas eingeführt wird, mit einer Vorrichtung nach wenigstens einem der voraufgehenden Patentanspruche,
dadurch gekennzeichnet,
daß bei Druckanstieg in der Förderleitung in Förderrichtung vor der Verbindungsleitung bzw. deren Mündung diese für Luftzufuhr aus einer Nebenleitung mit hohem Druck geöffnet wird, und daß diese Luftzufuhr in die Förderleitung bei Druckausgleich in der Förderleitung im Bereich vor sowie nach der Mündung der Verbindungsleitung unterbrochen wird.

## Claims

1. Device for controlling the feed of air from a secondary conduit through a connecting conduit into a conveyor conduit of a pneumatic conveyor, in which the connecting conduit can be closed off by means of a control element with an energy store, especially a spring, characterised by a slide valve (24) as a control element in the connecting conduit (12, 12ₑ) which closes off the latter in a normal position and is arranged in a flow chamber (22) between a first and a second sensor conduit (46, 47), each of these opening at their other ends into the conveyor conduit (10) at different sides of the connecting conduit.

2. Device according to claim 1, characterised in that each of the sensor conduits (46, 47) is connected via a throttle section (40, 41) to the portion (12ₑ) of the connecting conduit (12) leading to the secondary conduit (16) and/or that each sensor conduit (46, 47) is connected directly (44) to the flow chamber (22) outside its throttle section (40, 41).

3. Device according to claim 1 or claim 2, characterised by a slide valve (24) with at least two piston bodies (27, 28) connected at a distance (i) by a portion (26) having a narrower cross section, said piston bodies being mounted with axial play in a longitudinal bore (22) forming the flow chamber and at least one of them being supported against the axially operative energy store (30), the portion having a narrower cross section opening the connecting conduit (12, 12ₑ) in the open position of the slide valve and the portion (26) having a narrower cross section optionally being situated in a position in which it is guided towards the energy store in the open position.

4. Device according to one of claims 1 to 3, characterised in that the inlets (34, 35) of the portions (12ₑ, 12) of the connecting conduit which can be separated by the slide valve (24) are displaced relative to one another in the longitudinal bore (22) by an axial amount (q) which is less than the axial length (i) of the slide valve portion (26) having a narrower cross section, and/or that the piston bodies (27, 28) are connected by an axial slide rod (26) which forms an annular chamber (38) together with the wall of the longitudinal bore (22).

5. Device according to at least one of claims 1 to 4, characterised in that the portion (12) of the connecting conduit coming from the conveyor conduit (10) opens in the normal position of the slide valve (24) into the then sealed annular chamber (38) or the like and the other portion (12ₑ) of the connecting conduit is closed off by the piston body (28) attached to the energy store (30), and/or that the longitudinal bore (22) extends in a housing block (20) and is closed off by end plates (32, 32ₑ), thereby opening end connections to the sensor conduits (46, 47).

6. Device according to at least one of claims 1 to 5, characterised in that one end plate (32) serves as a support for the energy store (30) and this projects into a blind bore (29) in the adjacent piston body (28), and/or that the sensor conduits (46, 47) open into the conveyor conduit (10) at different axial distances (a and b) from the connecting conduit (12).

7. Device according to at least one of claims 1 to 6, characterised in that valves (50, 52) are arranged upstream of the inlet points (13 or 48, 49) of the connecting conduit (12) and/or the sensor conduits (46, 47), the diameter (r) of the throttle sections (40) extending parallel to the longitudinal bore (22) optionally being approximately 1 mm.

8. Device for closing and opening conduits, especially sensor or connecting conduits, according to at least one of claims 1 to 7, characterised in that at least one lip (58) is associated with a conveyor gap (68, 68ₐ) and the conveyor gap can be closed by the said lip.

9. Device according to claim 8, characterised in that the circumferential lip (58) is connected in one piece to an elastic ring (57) and in the rest position is inclined outwardly at an angle (w) relative to a radial plane of the ring.

10. Device according to claim 8 or claim 9, characterised in that the lip (58) is moulded on to the ring (57) close to the inner face (62) of the ring and is separated from the ring by a wedge-shaped gap (60), and/or that the end edge (64) of the lip (58) is situated outside the outer face (63) of the ring.

11. Device according to one of claims 8 to 10, characterised in that the lip (58) bears in the closed position against a plate (66) which is opposite the open conduit end (14) embraced by the ring (57) at a distance (k) and defines the conveyor gap (68).

12. Device according to at least one of claims 8 to 11, characterised in that a closed conduit end (70) is provided in at least one radial plane with openings (74) and lips (58) meeting therein are provided on either side of the radial plane, the lips (58) optionally defining a conveyor gap (68ₐ) in the open position.

13. Device according to at least one of claims 8 to 12, characterised in that the ring (57) is mounted in a shoulder (56) of the conduit (14, 70).

14. Method for the pneumatic transport of materials in a tubular conveyor conduit into which pressurised gas is introduced from a connecting conduit, preferably transversely to the conveying direction, by a device according to at least one of the preceding claims, characterised in that, in the event of an increase in pressure in the conveyor conduit in the conveying direction upstream of the connecting conduit or its inlet, the latter is opened for the supply of air under high pressure from a secondary conduit, and that this supply of air into the conveyor conduit is interrupted upon equalisation of the pressure in the conveyor conduit in the region upstream of and downstream of the inlet of the connecting conduit.

## Revendications

1. Dispositif destiné à commander l'alimentation en air d'une conduite de transport d'une installation de transport pneumatique, à partir d'une conduite auxiliaire, au travers d'une conduite de liaison, la conduite de liaison pouvant être obturée par un organe de commande comportant un accumulateur d'énergie, notamment un ressort, caractérisé par un tiroir (24) en guise d'organe de commande dans la conduite de liaison (12, 12e), qui, dans une position initiale, obture cette conduite de liaison, et qui est disposé dans une chambre d'écoulement (22) entre une première et une seconde conduite de détection (46, 47), qui chacune débouche, par son autre extrémité, dans la conduite de transport (10), sur un autre côté de la conduite de liaison.

2. Dispositif selon la revendication 1, caractérisé en ce que chacune des conduites de détection (46, 47) est raccordée par une section d'étranglement (40, 41) au tronçon (12e) de la conduite de liaison (12), qui conduit à la conduite auxiliaire (16), et/ou en ce que chaque conduite de détection (46, 47) est raccordée, en-dehors de sa section d'étranglement (40, 41), directement (44) à la chambre d'écoulement (22).

3. Dispositif selon la revendication 1 ou 2, caractérisé par un tiroir (24) comportant au moins deux corps de piston (27, 28) reliés, en étant espacés d'une distance (i), par un tronçon (26) de section transversale réduite, et montés avec un jeu axial, dans un alésage longitudinal (22) formant la chambre d'écoulement, et dont l'un au moins s'appuie sur l'accumulateur d'énergie (30) agissant en direction axiale, le tronçon de section transversale réduite ouvrant la conduite de liaison (12, 12e), en position d'ouverture du tiroir, et, ce tronçon (26) de section transversale réduite, dans la position d'ouverture, se trouvant, le cas échéant, dans une position repoussée à l'encontre de l'accumulateur d'énergie.

4. Dispositif selon l'une des revendications 1 à 3, caractérisé en ce que les orifices (34, 35), dans l'alésage longitudinal (22), des tronçons (12e, 12) de la conduite de liaison pouvant être isolés par le tiroir (24), sont décalés l'un par rapport à l'autre d'une valeur axiale (q), qui est inférieure à la longueur axiale (i) du tronçon de tiroir (26) de section transversale réduite, et/ou en ce que les corps de piston (27, 28) sont reliés par une tige de tiroir axiale (26), qui forme une chambre annulaire (38) avec la paroi de l'alésage longitudinal (22).

5. Dispositif selon l'une au moins des revendications 1 à 4, caractérisé en ce que, dans la position initiale du tiroir (24), le tronçon (12) de la conduite de liaison arrivant de la conduite de transport (10) débouche dans la chambre annulaire (38) ou analogue, alors étanche, et l'autre tronçon (12e) de la conduite de liaison est obturé par le corps de piston (28) adjoint à l'accumulateur d'énergie (30), et/ou en ce que l'alésage longitudinal (22) s'étend dans un bloc de carter (20) et est fermé par des plaques frontales (32, 32e) en laissant subsister des liaisons terminales avec les conduites de détection (46, 47).

6. Dispositif selon l'une au moins des revendications 1 à 5, caractérisé en ce qu'une plaque frontale (32) sert de butée pour l'accumulateur d'énergie (30), celui-ci s'engageant dans un alésage borgne (29) du corps de piston (28) voisin, et/ou en ce que les conduites de détection (46, 47) débouchent dans la conduite de transport (10), à des distances axiales différentes (a et b) de la conduite de liaison (12).

7. Dispositif selon l'une au moins des revendications 1 à 6, caractérisé en ce que des soupapes (50, 52) sont disposées en amont des orifices (13 et 48, 49) de la conduite de liaison (12) et/ou des conduites de détection (46, 47), le diamètre (r) des sections d'étranglement (40) qui s'étendent parallèlement à l'alésage longitudinal (22), valant, le cas échéant, environ 1 mm.

8. Dispositif destiné à obturer et à ouvrir des conduites tubulaires, notamment de conduites de détection ou de liaison selon l'une au moins des revendications 1 à 7, caractérisé en ce qu'au moins une lèvre (58) est associée à un interstice de refoulement (68, 68a), ce dernier pouvant être obturé par la lèvre.

9. Dispositif selon la revendication 8, caractérisé en ce que la lèvre périphérique (58) est reliée d'un seul tenant à une bague élastique (57), et, en position de repos, est inclinée vers l'extérieur, d'un angle (w) par rapport à un plan radial de la bague.

10. Dispositif selon la revendication 8 ou 9, caractérisé en ce que la lèvre (58) est formée sur la bague (57), à proximité de la surface intérieure (62) de la bague, et est séparée de la bague, à partir de celle-ci par un interstice en forme de coin (60), et/ou en ce que le bord d'extrémité (64) de la lèvre (58) se situe en-dehors de la surface extérieure (63) de la bague.

11. Dispositif selon l'une des revendications 8 à 10, caractérisé en ce qu'en position de fermeture, la lèvre (58) s'applique sur une plaque (66), qui se situe en face, et à une distance (k), de l'extrémité ouverte de conduite (14), entourée par la bague (57), et qui délimite l'interstice de refoulement (68).

12. Dispositif selon l'une au moins des revendications 8 à 11, caractérisé en ce qu'une extrémité fermée de conduite (70) est munie, dans au moins un plan radial, d'ouvertures de passage (74), et en ce que de part et d'autre de ce plan radial, et se rejoignant dans celui-ci, sont prévues des lèvres (58), celles-ci délimitant, le cas échéant, en position d'ouverture, un interstice de refoulement (68a).

13. Dispositif selon l'une au moins des revendications 8 à 12, caractérisé en ce que la bague (57) est montée sur un dégagement épaulé (56) de la conduite (14, 70).

14. Procédé de transport pneumatique de produits à transporter, dans une conduite de transport tubulaire, dans laquelle est introduit, de préférence transversalement à la direction de transport, du gaz sous pression, à partir d'une conduite de liaison, le procédé mettant en oeuvre un dispositif selon l'une au moins des revendications précédentes, caractérisé en ce que dans le cas d'une augmentation de pression dans la conduite de transport, avant la conduite de liaison ou avant son orifice, et en se référant à la direction du transport, cette conduite de liaison est ouverte pour être alimentée en air à partir d'une conduite auxiliaire à une pression élevée, et en ce que cette alimentation en air de la conduite de transport est interrompue, lorsque l'équilibre de pression est atteint dans la conduite de transport, dans la zone située avant l'orifice de la conduite de liaison, ainsi qu'après cet orifice.
